# EUROPÄISCHE PATENTSCHRIFT

(11) **EP 1 402 940 B1**
(45) Veröffentlichungstag und Bekanntmachung des Hinweises auf die Patenterteilung: **17.05.2006**
(21) Anmeldenummer: 03027248.8
(22) Anmeldetag: 20.09.1999
(51) Int. Cl.: B01F 13/00, B01F 15/02, B05C 17/00

(54) **Mischer für Mehrkomponentenpasten**
Mixer for multi-component pastes
Mélangeur pour pâtes à plusieurs constituants

(30) Priorität: 16.10.1998 DE 29818499 U
(43) Veröffentlichungstag der Anmeldung: 31.03.2004
(62) Teilanmeldung aus: 99118582.8
(73) Patentinhaber: 3M ESPE AG, 82229 Seefeld (DE)
(72) Erfinder: Wagner, Ingo, 82237 Wörthsee (DE); Brandhorst, Gerd, 86899 Landsberg (DE); Peuker, Marc, 86938 Schondorf (DE); Hesshaimer-Wolf, Christina, 82256 Fürstenfeldbruck/Aich (DE)

(56) Entgegenhaltungen:
- EP-A- 0 378 806
- EP-A- 0 492 412
- EP-A- 0 584 428
- EP-A- 0 885 651
- DE-U- 9 412 703
- DE-U- 29 706 235

## Beschreibung

Zur Herstellung pastöser Mehrkomponentenmassen, beispielsweise dentaler Abformmassen, werden Mischgeräte verwendet, bei denen die einzelnen Komponenten gleichzeitig aus separaten Kartuschenzylindern einem Mischer zugeführt werden, an dessen vorderem Ende die gemischte Paste austritt. Bei dem Mischer kann es sich um einen statischen Mischer oder einen dynamischen Mischer (mit rotierendem Mischerelement) handeln. Der am vorderen Ende des Mischers austretende Pastenstrang kann direkt auf einen Abformlöffel ausgebracht werden.

Je nach Viskosität und Mischungsverhältnis kann es aufgrund unterschiedlichen Druckaufbaus in den einzelnen Kartuschenzylindern beim Anfahren des Gerätes dazu kommen, daß der eine Komponentenstrang den Mischer schneller erreicht als der andere. In einem solchen Fall tritt am Mischer zunächst ein Pastenstrang aus, dessen Mischungsverhältnis nicht dem gewünschten Wert entspricht, und der aus diesem Grund beispielsweise schlechter oder langsamer abbindet.

Handelt es sich bei der einen Komponente um die Basispaste und bei der anderen um den Katalysator einer dentalen Abformmasse, so liegt beispielsweise ein Mischungsverhältnis zwischen Basispaste und Katalysator von 5:1 vor. Wegen der unterschiedlichen Materialeigenschaften und/oder - mengen und der unterschiedlich großen Einlaßöffnungen ist zu beobachten, daß sich der Mischer zunächst mit der Basispaste füllt, bevor der Katalysator eintrifft, so daß eine erste Länge von etwa 3 cm des ausgebrachten Pastenstrangs nicht das gewünschte Mischungsverhältnis aufweist.

Bei einem bekannten statischen Mischer ist zwischen einer mit Einlaßöffnungen für zwei Komponenten versehenen Platte und dem Mischerelement ein Raum vorgesehen, der von einer in Axialrichtung stehenden Trennwand in zwei Kammern unterteilt wird. Die eine Kammer bildet eine gerades axiales Strömungsrohr für die Komponente mit dem kleineren Volumenanteil, während die andere Kammer den restlichen Querschnitt einnimmt, der wesentlich größer ist als es dem Volumenanteil dieser Komponente entspricht, und durch eine Querwand von dem Mischerzylinder getrennt ist. Diese andere Kammer bildet somit eine Art Stauraum, den die Komponente mit dem größeren Volumenanteil zunächst füllt, bevor sie durch eine enge Durchtrittsöffnung in der Querwand an das Mischerele-ment gelangt. Auf diese Weise soll erreicht werden, daß beide Komponenten das Mischerelement im wesentlichen gleichzeitig erreichen.

Ein Problem bei diesem bekannten Gerät besteht darin, daß die genannte Querwand mit der engen Durchtrittsöffnung den Strömungswiderstand für die betreffende Komponente beträchtlich erhöht und daher das gesamte Gerät schwergängig macht. Ein weiterer Nachteil besteht in der durch den Stauraum deutlich erhöhten axialen Länge des Gerätes.

Dynamische Mischer für Mehrkomponentenmassen sind aus der EP-A-0 492 412 und der DE-U-29 706 235 bekannt.

Der Erfindung liegt die Aufgabe zugrunde, einen möglichst leichtgängigen und kompakten Mischer zur Herstellung von Mehrkomponentenpasten anzugeben, mit dem sich ein Pastengemisch mit von Anfang an richtigem Mischungsverhältnis erzeugen läßt.

Die erfindungsgsmäße Lösung dieser Aufgabe ist in den unabhängigen Ansprüchen angegeben. Der in dem erfindungsgemäßen Mischer vorgesehene Umwegkanal zwischen der von der Komponente mit dem größeren Volumenanteil durchsetzten Einlaßöffnung und dem Mischerelement kann über seine gesamte Länge denselben Querschnitt haben wie die betreffende Einlaßöffnung, so daß der gesamte Strömungswiderstand kaum erhöht wird. Ferner bewirkt der Umwegkanal infolge seiner Anordnung keine wesentliche Erhöhung der Gesamtabmessungen des Mischers.

Aus EP 0 302 819 A2 ist ein Kartuschenmagazin für fließfähige Massen bekannt, das zwei Behälter mit unterschiedlichen Durchmessern zur Aufnahme unterschiedlicher Mengen zweier Komponenten der Masse aufweist. Auch bei diesem Gerät sind zwar die Verbindungskanäle zwischen den Kartuschenauslässen und dem gemeinsamen Auslaßstutzen unterschiedlich lang; dies beruht aber lediglich auf der Tatsache, daß der gemeinsame Auslaßstutzen aus der axialen Mitte des Kartuschensystems zu einem Rand hin versetzt ist. Außerdem tritt das genannte Problem des unrichtigen Mischungsverhältnisses am Stranganfang bei der zweiten und jeder weiteren Anwendung auf, da dann kein zeitversetzter Pastenvorschub mehr erfolgt.

Die Anwendung der Erfindung auf einen dynamischen Mischer bei dem beide Komponenten das Mischerelement an dicht beieinander gelegenen Stellen erreichen und jeder Mischvorgang von Anfang an effektiv wird, ist günstig. Eine Maßnahme, wonach zur Herstellung von dentalen Abformmassen die Verzögerungseinrichtung im Strömungsweg der Basismasse angeordnet ist, stellt eine für typische Basis- und Katalysatormassen zweckmäßige Gestaltung dar. Da im übrigen ein gewisser Überschuß an Katalysator allenfalls zu einem geringfügig schnelleren Abbinden führt, die Eigenschaften der fertigen Paste jedoch nicht wesentlich ändert, ist es in derartigen Fällen zweckmäßig, sicherzustellen, daß der Katalysator die Mischkammer zuerst benetzt, so daß von Anfang an eine brauchbar gemischte Paste erzeugt wird.

Ein Ausführungsbeispiel der Erfindung wird nachstehend anhand der Zeichnung näher erläutert. Darin zeigt
- Figur 1: einen Axialschnitt durch einen Mischer längs der Linie I-I nach Figur 2,
- Figur 2: eine Stirnansicht des Mischers in Richtung des Pfeils II in Figur 1, und
- Figur 3: einen Schnitt längs der Linie III-III in Figur 1.

Der in der Zeichnung dargestellte Mischer umfaßt ein in seinem Hauptteil zylindrisches Gehäuse **10** mit einer vorderen Ausbringöffnung 11, einer die hintere Gehäusewand bildenden Abschlußplatte **12** und einem in dem Gehäuse **10** und in der Abschlußplatte **12** gelagerten Mischerelement **13** mit Mischerflügeln **14.** Eine am hinteren Ende des Mischerkerns vorgesehene Sechskantöffnung **15** dient zum Ankoppeln des Mischerelements **13** an eine (nicht gezeigte) Antriebsachse.

Die Abschlußplatte **12** weist zwei nach hinten ragende Einlaßstutzen **16, 17** auf, mit denen der Mischer sich an das vordere Ende einer in eine Ausbringvorrichtung eingesetzten (nicht gezeigten) Kartusche ankoppeln läßt. In dem dargestellten Ausführungsbeispiel ist angenommen, daß der Mischer zur Herstellung einer dentalen Abformmasse dient, die aus einer pastösen Basismasse und einer Katalysatormasse in einem Verhältnis von beispielsweise 5:1 gemischt wird, wobei der Einlaßstutzen **16** für die Basismasse eine größere Querschnittsfläche hat als der Einlaßstutzen **17** für den Katalysator.

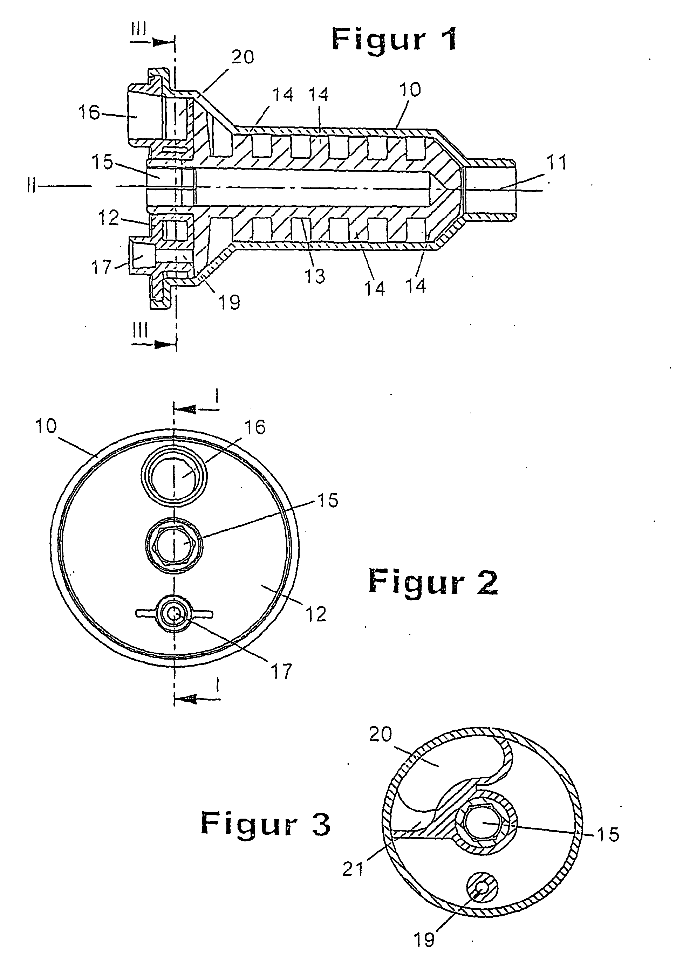

Wie aus Figur 1 und 3 hervorgeht, führt ein mit dem Einlaßstutzen **17** verbundener Kanal **19** geradlinig in die das Mischerelement **13** enthaltende Kammer des Mischergehäuses **10**.

Dagegen verläuft der von der Basismasse zurückzulegende Weg von dem Einlaßstutzen **16** über einen Umwegkanal **20** und eine an dessen Ende angeordnete Durchtrittsöffnung **21** in die Mischkammer des Gehäuses **10**. Der Umwegkanal **20** liegt im wesentlichen in einer quer zur Mischerachse stehenden Ebene und erstreckt sich in dem gezeigten Beispiel über einen Winkel von etwa 90° bogenförmig um die Achse. Die genannte Ebene kann gegenüber der Achse etwas geneigt sein, so daß sich insgesamt ein etwa schraubenförmiger Umwegkanal **20** ergibt.

Der an den Einlaßstutzen **16** anschließende Umwegkanal **20** bewirkt, daß die Durchtrittsöffnung **21** um weniger als 180° gegenüber dem geraden Einlaßstutzen **17** versetzt ist, so daß beide Komponenten an dicht benachbarten Stellen das Mischerelement **13** erreichen. Dies ist für eine gute Vermischung günstig.

Bei Inbetriebnahme des Mischers werden die beiden Komponenten durch die (nicht gezeigte) Ausbringvorrichtung mit Hilfe von in der Kartusche vorgesehenen Kolben in die Einlaßstutzen **16** und **17** gedrückt. Während der den Einlaßstutzen **17** durchsetzende Katalysator über den gerade und axial verlaufenden Kanal **19** unmittelbar in die Mischkammer gelangt, strömt die dem Einlaßstutzen **16** zugeführte Basismasse über den Umwegkanal **20** und die Durchtrittsöffnung **21** in die Mischkammer. Dadurch wird erreicht, daß die Basismasse mit dem größeren Volumenanteil das Mischerelement **13** jedenfalls nicht vor dem Katalysator erreicht.

Erreicht der Katalysator das Mischerelement **13** so rechtzeitig, daß er dieses benetzt, bevor die Basismasse eintrifft, so wird dadurch nur das anfängliche Mischungsverhältnis verändert; ein geringer Überschuß an Katalysator ist aber bei den hier angenommenen dentalen Abformmassen unkritisch und einem Überschuß an Basismasse vorzuziehen.

Die beschriebenen Maßnahmen sind auch bei Mischern anwendbar, die den fertigen Pastenstrang aus mehr als zwei Komponenten erzeugen. In einem solchen Fall können an zwei oder mehreren Einlaßstutzen Umwegkanäle anschließen, die gegebenenfalls auch unterschiedlich lang sind, um je nach den Strömungseigenschaften jeder Komponente zu erreichen, daß sämtliche Komponenten das Mischerelement **13** im wesentlichen gleichzeitig erreichen.

## Patentansprüche

1. Mischer zum Mischen von Pasten aus Komponenten mit ungleichen Volumenteilen,
mit einem Gehäuse (10) mit einer Mischkammer
und einem um die Längsachse drehbar in dem Gehäuse (10) gelagerten Mischerelements (13) mit Mischerflügeln und einem Mischerkern,
wobei am hinteren Ende des Mischerkems eine Sechskantöffnung (15) vorhanden ist, die zum Ankoppeln an eine Antriebsachse dient,
wobei das Gehäuse an seinem hinteren Ende für jede Komponente eine Einlassöffnung (16, 17) aufweist,
wobei zwischen der Einlassöffnung (16), die von der oder den Komponenten mit dem größeren Volumenanteil durchsetzt wird, und dem Mischerelement (13) eine Verzögerungskammer vorgesehen ist, die einen den Weg von der Einlassöffnung (16) zu dem Mischerelement (13) verlängernden, längs eines Bogens um die Längsachse verlaufenden Umwegkanal (20) bildet.
wobei der von der Komponente mit dem größeren Volumenanteil zurückzulegende Weg von der Einlassöffnung (16) über den Umwegkanal (20) und eine an dessen Ende angeordnete Durchtrittsöffnung (21) in die Mischkammer des Gehäuses (10) führt und
wobei die Komponenten an um weniger als 180° gegeneinander versetzte Stellen an das Mischerelement (13) gelangen.

2. Verwendung des Mischers nach Anspruch 1 in einem Verfahren zur Herstellung pastöser Mehrkomponentenmassen, umfassend eine pastöse Basis- und Katalysatormasse, wobei bei Inbetriebnahme des Mischers die beiden Komponenten durch eine Ausbringvorrichtung mit Hilfe von in einer Kartusche vorgesehenen Kolben in die Einlassstutzen gedrückt werden, und wobei die Basis- und Katalysatormasse in einem Verhältnis von 5: 1 vorliegen.

3. Kit, umfassend eine Basis- und eine Katalysatormasse im Verhältnis 5:1 und einen Mischer gemäß Anspruch 1, der sich mittels zweier nach hinten ragenden Einlassöffnungen (16, 17) an das vordere Ende einer in eine Ausbringvorrichtung einsetzbaren Kartusche ankoppeln lässt, wobei die Basis- und die Katalysatormasse mittels der Ausbringvorrichtung mit Hilfe von in der Kartusche vorgesehenen Kolben in die Einlassstutzen (16) und (17) des Mischers gedrückt werden können.

4. Kit nach Anspruch 3, wobei es sich bei dem Pastengemisch um eine dentale Abformmasse handelt.

## Claims

1. Mixer for the mixing of pastes consisting of components having unequal parts by volume, with a housing (10) having a mixing chamber, and with a mixer element (13) mounted in the housing (10) rotatably about the longitudinal axis and having mixer blades and a mixer core, a hexagonal port (15), which serves for coupling to a drive shaft, being present at the rear end of the mixer core, the housing having at its rear end an inlet port (16, 17) for each component, there being provided between the inlet port (16), through which the component or components having the larger volume fraction passes, and the mixer element (13) a delay chamber which forms a detour duct (20) prolonging the path from the inlet port (16) to the mixer element (13) and running along an arc about the longitudinal axis, the path to be followed by the component which has the larger volume fraction leading from the inlet port (16) via the detour duct (20) and a passage orifice (21) arranged at its end into the mixing chamber of the housing (10), and the components arriving at the mixer element (13) at points which are offset at less than 180° with respect to one another.

2. Use of the mixer according to Claim 1 in a method for producing pasty multi-component compounds comprising a pasty basic compound and catalyst compound, when the mixer is put into operation the two components being pressed through a discharge device into the inlet connection pieces with the aid of pistons provided in a cartridge, and the basic compound and catalyst compound being present in a ratio of 5:1.

3. Kit, comprising a basic compound and catalyst compound in the ratio 5:1 and a mixer according to Claim 1 which can be coupled by means of two rearwardly projecting inlet ports (16, 17) to the front end of a cartridge capable of being inserted into a discharge device, the basic compound and catalyst compound being capable of being pressed by means of the discharge device into the inlet connection pieces (16) and (17) of the mixer with the aid of pistons provided in the cartridge.

4. Kit according to Claim 3, the paste mixture being a dental moulding compound.

## Revendications

1. Mélangeur pour mélanger des pâtes de constituants avec des parties en volume différentes,
avec un boîtier (10) avec une chambre de mélange,
et un élément mélangeur (13) monté dans le boîtier (10) et rotatif autour de l'axe longitudinal,
dans lequel il est prévu à l'extrémité arrière du noyau de mélangeur une ouverture hexagonale (15), qui sert pour le couplage à un axe d'entraînement,
dans lequel le boîtier présente à son extrémité arrière une ouverture d'entrée (16, 17) pour chaque composant,
dans lequel il est prévu, entre l'ouverture d'entrée (16), qui est traversée par le ou les constituant(s) avec la plus grande partie en volume, et l'élément mélangeur (13), une chambre de ralentissement qui forme un canal de dérivation (20) allongeant le chemin de l'ouverture d'entrée (16) à l'élément mélangeur (13) et situé le long d'un arc autour de l'axe longitudinal,
dans lequel le chemin à parcourir par le constituant avec la plus grande partie en volume depuis l'ouverture d'entrée (16) par le canal de dérivation (20) et une ouverture de sortie (21) disposée à son extrémité, conduit dans la chambre de mélange du boîtier (10), et
dans lequel les constituants arrivent sur l'élément mélangeur (13) en des endroits décalés l'un de l'autre de moins de 180°.

2. Utilisation du mélangeur selon la revendication 1 dans un procédé pour fabriquer des masses pâteuses à plusieurs constituants, comprenant une masse pâteuse de base et une masse de catalyseur, dans lequel, à la mise en service du mélangeur, les deux constituants sont refoulés dans les tuyaux d'entrée par un dispositif de production à l'aide de pistons prévus dans une cartouche, et
dans laquelle les masses de base et de catalyseur sont présentes dans une proportion de 5:1.

3. Ensemble, comprenant une masse de base et une masse de catalyseur dans une proportion de 5:1 et un mélangeur selon la revendication 1, qui peut être couplé au moyen de deux tuyaux d'entrée orientés vers l'arrière (16, 17), à l'extrémité avant d'une cartouche insérable dans un dispositif de production, les masses de base et de catalyseur pouvant être refoulées dans les tuyaux d'entrée (16, 17) du mélangeur au moyen du dispositif de production à l'aide de pistons prévus dans la cartouche.

4. Ensemble selon la revendication 3, dans lequel le mélange pâteux est une masse de moulage dentaire.
